# EUROPÄISCHE PATENTSCHRIFT

(11) **EP 1 649 536 B1**
(45) Veröffentlichungstag und Bekanntmachung des Hinweises auf die Patenterteilung: **03.09.2008**
(21) Anmeldenummer: 04762490.3
(22) Anmeldetag: 23.07.2004
(51) Int. Cl.: H01M 8/24

(54) **VERFAHREN UND VORRICHTUNG ZUR HERSTELLUNG EINES BRENNSTOFFZELLENSTAPELS**
METHOD AND DEVICE FOR PRODUCING A FUEL CELL STACK
PROCEDE ET DISPOSITIF DE FABRICATION D'UNE PILE À COMBUSTIBLE

(30) Priorität: 25.07.2003 DE 10334129
(43) Veröffentlichungstag der Anmeldung: 26.04.2006
(73) Patentinhaber: Staxera GmbH, 01237 Dresden (DE)
(72) Erfinder: STELTER, Michael Dr., 09247 Chemnitz (DE)
(86) Internationale Anmeldenummer: PCT/DE2004/001641
(87) Internationale Veröffentlichungsnummer: WO 2005/013390

(56) Entgegenhaltungen:
- EP-A- 0 642 185
- WO-A2-02/09216
- US-A- 4 430 179
- PATENT ABSTRACTS OF JAPAN Bd. 1999, Nr. 04, 30. April 1999 (1999-04-30) & JP 11 007975 A (YOYU TANSANENGATA NENRYO DENCHI HATSUDEN SYST GIJUTSU KENKYU KUMIAI), 12. Januar 1999 (1999-01-12)
- PATENT ABSTRACTS OF JAPAN Bd. 008, Nr. 268 (E-283), 7. Dezember 1984 (1984-12-07) & JP 59 138075 A (HITACHI SEISAKUSHO KK), 8. August 1984 (1984-08-08)

## Beschreibung

Die Erfindung betrifft ein Verfahren zur Herstellung eines Brennstoffzellenstapels, mit den Schritten: a) Aufstapeln eines Brennstoffzellenstapels, und b) Fügen des Brennstoffzellenstapels unter Erhitzen und Komprimieren des aufgestapelten Brennstoffzellenstapels.

Weiterhin betrifft die Erfindung eine Vorrichtung zur Herstellung eines Brennstoffzellenstapels, insbesondere eine Vorrichtung zur Durchführung des erfindungsgemäßen Verfahrens, mit einer Heizeinrichtung zum Erhitzen eines aufgestapelten Brennstoffzellenstapels und einer Einrichtung zum Komprimieren des aufgestapelten Brennstoffzellenstapels.

Beispielsweise bekannte SOFC-Brennstoffzellenstapel (SOFC = "Solid Oxide Fuel Cell") umfassen in der Regel mehrere Brennstoffzellenelemente mit jeweils dazwischen angeordneten Dichtungen sowie ein Paar Endplatten und Stromabnehmerplatten. Derartige Brennstoffzellenstapel werden durch bekannte Herstellungsverfahren beispielsweise wie folgt hergestellt: Zunächst wird der Brennstoffzellenstapel kalt aufgestapelt. Dabei befinden sich die Anodenseiten der Brennstoffzellen noch im unreduzierten Zustand (zum Beispiel NiO statt Ni). Kompressible Dichtungen sind noch unkomprimiert und Glasdichtungen, wie zum Beispiel Glaspaste oder Glaslot, sind noch ungebrannt, das heißt grün. Bei den bekannten Herstellungsverfahren werden die aufgestapelten Brennstoffzellenstapel anschließend in einem Ofen erhitzt, bis die Glaspaste beziehungsweise das Glaslot aufschmilzt. Dabei wird der Brennstoffzellenstapel unter mechanischer Last komprimiert, so dass die Dichtungen aufschmelzen und abdichten. Gleichzeitig oder nachfolgend wird in den Anodenraum des Brennstoffzellenstapels ein reduzierendes Gas eingebracht, zum Beispiel Wasserstoff, wodurch die Anode reduziert wird, beispielsweise von NiO zu Ni. Gegebenenfalls liegt die mechanische Last während des Reduktionsvorgangs weiter an, das heißt, es erfolgt eine weitere Kompression des Brennstoffzellenstapels, um eine Abnahme der Dicke der Brennstoffzellen beim Schrumpfen auszugleichen.

Eine bekannte Möglichkeit zur Kompression eines aufgestapelten Brennstoffzellestapels ist beispielsweise aus der US 4,615,107 bekannt.

Die JP 11 007 975, WO 02/09216, JP 59 138 075 und US 4,430,179 geben Vorrichtungen und Verfahren zum geregelten Komprimieren von Brennstoffzellen während des Betriebs an.

Ein Problem bei den bekannten Verfahren und Vorrichtungen zur Herstellung von Brennstoffzellenstapeln besteht darin, dass das Fügen des Brennstoffzellenstapels unkontrolliert und ohne die Möglichkeit erfolgt, in den Prozess eingreifen zu können, weshalb es zu hohen Ausschussraten kommt. Weiterhin kann beispielsweise eine Prüfung des Brennstoffzellenstapels auf Gasdichtheit erst nach Abschluss des Fügevorgangs erfolgen.

Der Erfindung liegt die Aufgabe zugrunde, die gattungsgemäßen Verfahren und Vorrichtungen derart weiterzubilden, dass die bei der Herstellung von Brennstoffzellenstapeln bisher in Kauf genommenen hohen Ausschussraten verringert und dadurch die Kosten gesenkt werden.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das erfindungsgemäße Verfahren baut auf dem gattungsgemäßen Stand der Technik dadurch auf, dass das Komprimieren des aufgestapelten Brennstoffzellenstapels das Anlegen von zumindest einer geregelten Kraftkomponente an den aufgestapelten Brennstoffzellenstapel umfasst. Die Regelung der die Kompression bewirkenden Kraft bietet den Vorteil, schon während des Fügevorgangs in Abhängigkeit von momentan erzielten Fügeergebnissen (automatisch) in den Produktionsvorgang eingreifen zu können. Beispielsweise kann die die Kompression des Brennstoffzellenstapels bewirkende Kraft solange erhöht werden, bis anhand des aktuellen Fügeergebnisses die Dichtheit des Brennstoffzellenstapels mit großer Wahrscheinlichkeit angenommen werden kann oder sogar messtechnisch nachgewiesen wurde.

Bei bevorzugten Ausführungsformen des erfindungsgemäßen Verfahrens ist vorgesehen, dass in die Regelung der zumindest einen Kraftkomponente eine über zumindest einen Kraftsensor erfasste Verspannung des aufgestapelten Brennstoffzellenstapels eingeht. Der oder die Kraftsensoren können dabei beispielsweise zwischen dem aufgestapelten Brennstoffzellenstapel und einer Anlagefläche vorgesehen werden, gegen die der Brennstoffzellenstapel durch die geregelte Kraftkomponente gedrückt wird.

Zusätzlich oder alternativ kann vorgesehen sein, dass in die Regelung der zumindest einen Kraftkomponente eine über zumindest einen Streckensensor erfasste Änderung einer Abmessung des aufgestapelten Brennstoffzellenstapels eingeht. Die Veränderungen der Abmessungen des Brennstoffzellenstapels lassen in vielen Fällen auf das erzielte Fügeergebnis schließen. Alternativ zum Einsatz von einem oder mehreren Streckensensoren können in diesem Zusammenhang auch andere zur Erfassung der Abmessungen des Brennstoffzellenstapels geeignete Sensoren eingesetzt werden, beispielsweise optische Sensoren.

Eine ebenfalls bevorzugte Weiterbildung des erfindungsgemäßen Verfahrens sieht vor, dass die zumindest eine geregelte Kraftkomponente durch eine Druck- und/oder Zugeinrichtung erzeugt und vorzugsweise über zumindest einen Zuganker auf den aufgestapelten Brennstoffzellenstapel übertragen wird. Dabei kann die Druck- und/oder Zugeinrichtung die geregelte Kraftkomponente auf unterschiedliche dem Fachmann geläufige Arten erzeugen, beispielsweise hydraulisch, pneumatisch oder elektrisch. Wenn die zumindest eine geregelte Kraftkomponente durch Zug erzeugt wird, ist der Einsatz von zumindest einem Zuganker vorteilhaft. Dies gilt insbesondere, wenn vorgesehen ist, dass der zumindest eine Zuganker auch nach Abschluss des Herstellungsverfahrens dazu bestimmt ist, die Verspannung des Brennstoffzellenstapels aufrechtzuerhalten.

In diesem Zusammenhang wird es als besonders vorteilhaft erachtet, dass sich der zumindest eine Zuganker durch eine im dem aufgestapelten Brennstoffzellenstapel vorgesehene Ausnehmung erstreckt. Insbesondere wenn die Ausnehmung in dem Brennstoffzellenstapel zentral angeordnet ist, ist der Einsatz von nur einem Zuganker zur Kompression des Brennstoffzellenstapels beim Fügevorgang sowie zur Aufrechterhaltung der Verspannung des Brennstoffzellenstapels nach dem Herstellungsvorgang in vielen Fällen ausreichend.

Das erfindungsgemäße Verfahren kann in vorteilhafter Weise dadurch weitergebildet sein, dass es weiterhin den folgenden während und/oder nach dem Schritt b) durchgeführten Schritt umfasst: c) Überprüfen des bereits zumindest teilweise gefügten Brennstoffzellenstapels auf Gasdichtheit. In diesem Zusammenhang wird es besonders bevorzugt, wenn die Überprüfung auf Gasdichtheit noch während des Fügens erfolgt, das heißt zu einem Zeitpunkt, zu dem der Brennstoffzellenstapel gegebenenfalls noch weiter komprimiert werden kann, falls die erforderliche Gasdichtheit noch nicht sichergestellt ist.

In diesem Zusammenhang wird bevorzugt, dass der Schritt c) umfasst, dass der Brennstoffzellenstapel mit einem Gas geflutet wird, vorzugsweise mit einem inerten Prüfgas, und dass eine eventuelle Undichtigkeit des Brennstoffzellenstapels über einen Druckabfall des Gases erfasst wird.

In diesem Zusammenhang sieht eine bevorzugte Weiterbildung des erfindungsgemäßen Verfahrens vor, dass im Falle einer erfassten Undichtigkeit des Brennstoffzellenstapels der Brennstoffzellenstapel weiter erhitzt und/oder der Brennstoffzellenstapel weiter komprimiert wird. Auch in diesem Fall erfolgt die weitere Kompression vorzugsweise geregelt, wobei der Druckverlust zusätzlich oder alternativ in die Regelung eingehen kann.

Für das erfindungsgemäße Verfahren wird ebenfalls bevorzugt, dass es weiterhin den folgenden während und/oder nach dem Schritt b) und vorzugsweise während und/oder nach dem Schritt c) durchgeführten Schritt umfasst: d) chemisches Formieren der Brennstoffzellen des Brennstoffzellenstapels durch einbringen eines reduzierenden Gases, insbesondere eines reduzierenden Gasgemisches wie Wasserstoff und Stickstoff, in die Brennstoffzellen des Brennstoffzellenstapels. Es ist vorteilhaft, die Dichtheit des Brennstoffzellenstapels auch während des Formiervorgangs weiterhin zu überwachen, beispielsweise indem ein Austritt des reduzierenden Gases detektiert wird, um auch zu diesem Zeitpunkt des Herstellungsvorgangs noch geeignete Gegenmaßnahmen treffen zu können. Diese können beispielsweise in einer weiteren geregelten Kompression des Brennstoffzellenstapels bestehen. Daher ist es ebenfalls vorteilhaft, auch die Verspannung des Brennstoffzellenstapels weiter zu überwachen.

Für das erfindungsgemäße Verfahren wird es weiterhin als vorteilhaft erachtet, wenn vorgesehen ist, dass eine durch den Schritt d) hervorgerufene Volumenänderung des Brennstoffzellenstapels durch eine entsprechende Kompression des Brennstoffzellenstapels zumindest teilweise ausgeglichen wird. Auch in diesem Zusammenhang erfolgt die Kompression vorzugsweise geregelt im Sinne der Erfindung.

Für das erfindungsgemäße Verfahren wird ebenfalls bevorzugt, dass es weiterhin den folgenden nach dem Schritt d) durchgeführten Schritt umfasst: e) Prüfen der elektrischen Funktionsfähigkeit des Brennstoffzellenstapels. Auf diese Weise kann die Güte des hergestellten Brennstoffzellenstapels in vergleichsweise einfacher Weise bestimmt werden.

Dabei wird bevorzugt, dass die Durchführung des Schrittes e) umfasst, dass eine Anodenseite des Brennstoffzellenstapels mit einem Brenngas und eine Kathodenseite des Brennstoffzellenstapels mit einem Kathodengas beaufschlagt wird, und dass eine in dem Brennstoffzellenstapel entstehende Spannung und/oder ein dem Brennstoffzellenstapel entnehmbarer Strom gemessen wird. Dabei ist es vorteilhaft, wenn die Prüfung der elektrischen Funktionsfähigkeit des Brennstoffzellenstapels nur dann durchgeführt wird, wenn der Brennstoffzellenstapel nach dem Formieren noch dicht ist.

Eine, vorstehend bereits erwähnt, bevorzugte Ausführungsform des erfindungsgemäßen Verfahrens umfasst den folgenden weiteren Schritt: f) Verbinden des zumindest einen Zugankers mit zumindest einem Verriegelungselement, das die Verspannung des Brennstoffzellenstapels zumindest näherungsweise auch dann aufrechterhält, wenn der zumindest eine Zuganker von der Druck- und/oder Zugeinrichtung gelöst wird. Beispielsweise wenn der Zuganker zumindest teilweise durch eine Gewindestange gebildet ist, kann das Verriegelungselement in einfacher Weise durch eine Mutter gebildet sein.

Besondere Vorteile im Vergleich zu bekannten Herstellungsverfahren ergeben sich, wenn das erfindungsgemäße Verfahren vorsieht, dass zumindest die Schritte b) und d), vorzugsweise jedoch zumindest die Schritte b), c), d) und e) in einer gasdichten Prozesskammer durchgeführt werden, vorzugsweise ohne die Prozesskammer zwischenzeitlich zu öffnen. Bei der Prozesskammer kann es sich um eine stationäre oder um eine Prozesskammer handeln, die während des Herstellungsprozesses zwischen mehreren Bearbeitungsstationen hin- und herbewegt wird.

Die erfindungsgemäße Vorrichtung baut auf dem gattungsgemäßen Stand der Technik dadurch auf, dass die Einrichtung zum Komprimieren des aufgestapelten Brennstoffzellenstapels eine Druck- und/oder Zugeinrichtung umfasst, die dazu geeignet ist, zumindest eine geregelte Kraftkomponente auf den aufgestapelten Brennstoffzellenstapel auszuüben. Diese Lösung ermöglicht es, ebenso wie das erfindungsgemäße Verfahren, die Kompression des Brennstoffzellenstapels während dessen Herstellung solange geeignet zu variieren, bis der Brennstoffzellenstapel die gewünschten Eigenschaften aufweist. Dadurch gelingt es insbesondere, die bisher in Kauf genommenen hohen Ausschussraten deutlich zu senken. Mit der erfindungsgemäßen Vorrichtung werden die mit dem erfindungsgemäßen Verfahren erzielten Vorteile in gleicher oder ähnlicher Weise verwirklicht, weshalb zur Vermeidung von Wiederholungen auf die entsprechenden Ausführungen im Zusammenhang mit dem erfindungsgemäßen Verfahren verwiesen wird.

Gleiches gilt sinngemäß für die folgenden bevorzugten Ausführungsformen der erfindungsgemäßen Vorrichtung, wobei auch diesbezüglich auf die entsprechenden Ausführungen im Zusammenhang mit dem Ausgestaltungen des erfindungsgemäßen Verfahrens verwiesen wird.

Bei bevorzugten Ausführungsformen der erfindungsgemäßen Vorrichtung ist vorgesehen, dass der Druck- und/oder Zugeinrichtung zur Regelung der zumindest einen Kraftkomponente eine Regelungseinrichtung zugeordnet ist, welche die zumindest eine Kraftkomponente in Abhängigkeit von einer über zumindest einen Kraftsensor erfassten Verspannung des aufgestapelten Brennstoffzellenstapels und/oder in Abhängigkeit von einer über zumindest einen Streckensensor erfassten Änderung einer Abmessung des aufgestapelten Brennstoffzellenstapels regelt.

Dabei wird weiterhin bevorzugt, dass die Druck- und/oder Zugeinrichtung dazu geeignet ist, die zumindest eine geregelte Kraftkomponente über einen Zuganker auf den aufgestapelten Brennstoffzellenstapel zu übertragen.

Bevorzugte Ausführungsformen der erfindungsgemäßen Vorrichtung sehen weiterhin vor, dass sie eine zur Aufnahme des aufgestapelten Brennstoffzellenstapels vorgesehene gasdichte Prozesskammer und eine Gaszufuhreinrichtung aufweist, die dazu vorgesehen ist, die Prozesskammer und/oder einen in dieser angeordneten Brennstoffzellenstapel mit Gas zu fluten.

Eine vorteilhafte Weiterbildung der erfindungsgemäßen Vorrichtung sieht dabei vor, dass sie eine Gasabfuhreinrichtung aufweist.

Die erfindungsgemäße Vorrichtung ist weiterhin dadurch in vorteilhafter Weise weitergebildet, dass sie eine elektrische Prüfeinrichtung aufweist.

Um einen kontinuierlichen Montageprozess zu gewährleisten, kann die erfindungsgemäße Vorrichtung so ausgebildet werden, dass sie eine Mehrzahl von beweglichen gasdichten Prozesskammern aufweist, die dazu vorgesehen sind, zur Durchführung einzelner Brennstoffzellenstapel-Herstellungsschritte zu verschiedenen Bearbeitungsstationen bewegt zu werden.

In diesem Zusammenhang wird es besonders bevorzugt, dass die Mehrzahl der gasdichten Prozesskammern in Form eines Karussells angeordnet ist. Dabei sind insbesondere Ausführungsformen denkbar, bei denen die Montage- beziehungsweise Prozesskammern an Armen des Karussells angeordnet sind. In diesem Fall können Gaszufuhr- und -abfuhrleitungen, sowie elektrische Leitungen in vorteilhafter Weise in der Nabe des Karussells angeordnet sein und sich sternförmig zu den einzelnen Prozesskammern erstrecken. Befindet sich das Karussell in einer bestimmten Position, so wird eine Prozesskammer geöffnet und ein Brennstoffzellenstapel in der Prozesskammer aufgestapelt oder ein bereits aufgestapelter Brennstoffzellenstapel in die Prozesskammer eingebracht. Anschließend wird die Prozesskammer wieder geschlossen und das Karussell in Bewegung gesetzt. Somit können alle Schritte zum Fügen und Prüfen in der Zeit ablaufen, die das Karussell für eine Umdrehung benötigt. In diesem Fall kann der fertige Brennstoffzellenstapel an derselben Position entnommen werden, an der er kalt aufgesetzt wurde.

Aus dem Vorstehenden ergibt sich, dass ein wesentlicher Gesichtspunkt der vorliegenden Erfindung darin besteht, dass durch einen geregelten Fügevorgang die bei den bekannten Herstellungsverfahren in Kauf genommenen hohen Ausschusszahlen deutlich gesenkt werden können.

Die Erfindung wird nun unter Bezugnahme auf die beigefügten Zeichnungen anhand bevorzugter Ausführungsformen beispielhaft erläutert.

Dabei zeigt:
- Figur 1: eine vereinfachte, schematisch Prinzipdarstellung einer Ausführungsform der erfindungsgemäßen Vorrichtung, die zur Durchführung des erfindungsgemäßen Verfahrens geeignet ist;
- Figur 2: eine vereinfachte, schematische Prinzipdarstellung einer Einrichtung zur mechanischen Spannung und Überwachung eines Brennstoffzellestapels, wobei diese Einrichtung Bestandteil der Vorrichtung von Figur 1 ist;
- Figur 3: eine vereinfachte, schematische Prinzipdarstellung einer Einrichtung zur Gaszu- und -abfuhr, wobei diese Einrichtung Bestandteil der Vorrichtung von Figur 1 ist; und
- Figur 4: eine vereinfachte, schematische Prinzipdarstellung einer Einrichtung zur elektrischen Überwachung eines Brennstoffzellestapels, wobei diese Einrichtung Bestandteil der Vorrichtung von Figur 1 ist.

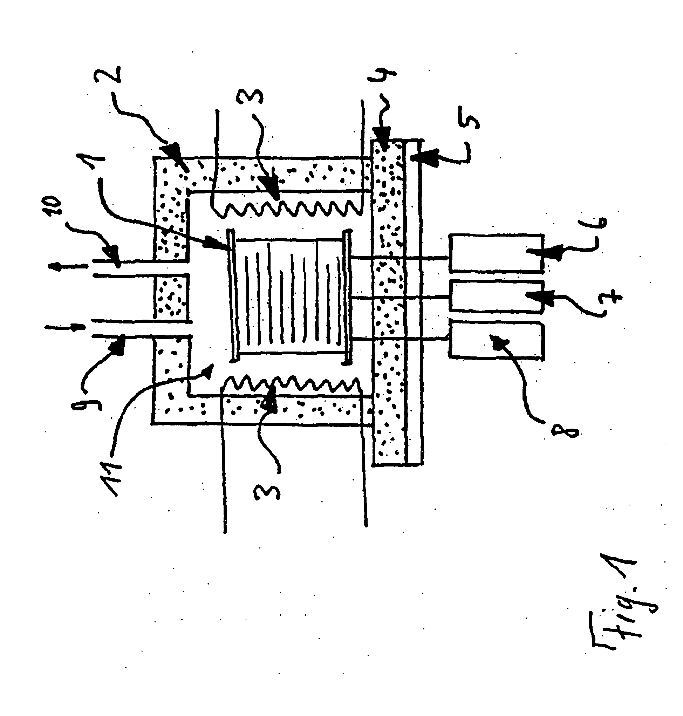

Figur 1 zeigt eine gasdichte Prozesskammer 11, die im Wesentlichen durch einen Tisch 5 und eine auf diesen aufgesetzte gasdichte Haube 2 gebildet ist. In der Prozesskammer 11 ist ein Brennstoffzellenstapel 1 aufgestapelt. Zwischen dem Tisch 5 und dem aufgestapelten Brennstoffzellenstapel 1 ist eine Isolierplatte 4 angeordnet, durch die sich unter Abdichtung Leitungen und sonstige Verbindungsmittel erstrecken, die die Prozesskammer 11 beziehungsweise den in dieser angeordneten Brennstoffzellenstapel 1 mit einer Einrichtung 6 zur elektrischen Überwachung des Brennstoffzellenstapels 1, einer Einrichtung 7 zur Gaszu- und -abfuhr sowie einer Einrichtung 8 zur mechanischen Spannung und Überwachung des Brennstoffzellenstapels 1 verbinden. Im oberen Bereich der gasdichten Haube 2 ist eine (weitere) Gaszufuhr 9 und eine (weitere) Gasabfuhr 10 angedeutet, wobei diese (weitere) Gaszufuhr 9 und (weitere) Gasabfuhr 10 gegebenenfalls der Einrichtung 7 zur Gaszu- und -abfuhr zugeordnet sein können. In der Prozesskammer 11 sind weiterhin Heizelemente 3 angeordnet, mit denen die Prozesskammer 11 beziehungsweise ein in dieser angeordneter Brennstoffzellenstapel 1 erhitzt werden kann.

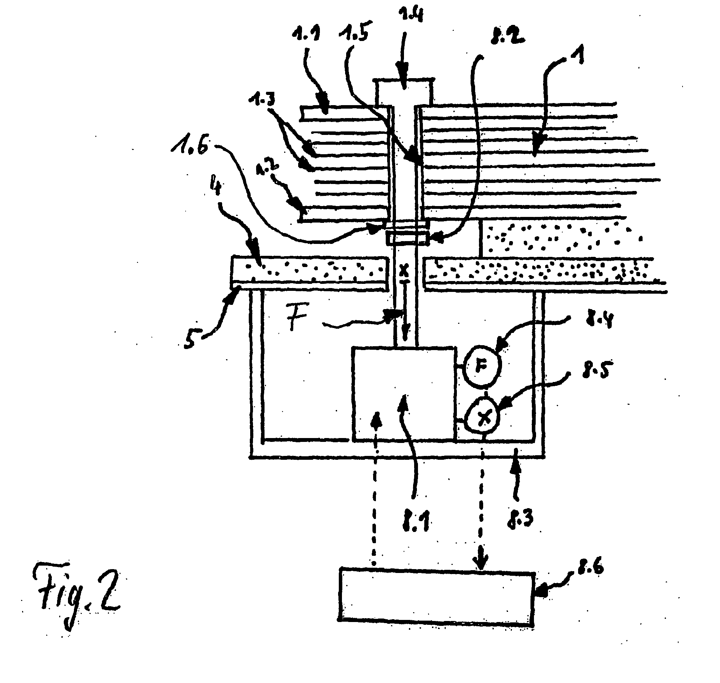

Die in Figur 1 dargestellte Vorrichtung wird nachfolgend anhand der Figuren 2 bis 4 näher erläutert, in denen einzelne Komponenten der in Figur 1 dargestellten Vorrichtung ausführlicher gezeigt sind.

Figur 2 zeigt eine vereinfachte, schematische Prinzipdarstellung einer Einrichtung zur mechanischen Spannung und Überwachung eines Brennstoffzellestapels, wobei diese Einrichtung Bestandteil der Vorrichtung von Figur 1 ist. In Figur 2 ist der auf dem Tisch 5 beziehungsweise der Isolierplatte 4 angeordnete Brennstoffzellenstapel 1 nur teilweise dargestellt. Der Brennstoffzellenstapel 1 umfasst eine untere Grundplatte 1.2 und eine obere Deckplatte 1.1. Zwischen der unteren Grundplatte 1.2 und der oberen Deckplatte 1.1 sind die einzelnen Brennstoffzellen 1.3 angeordnet. Der Brennstoffzellenstapel 1 umfasst eine Ausnehmung 1.5 durch die sich im dargestellten Fall ein Zuganker 1.4 erstreckt, der im fertig montierten Zustand die Verspannung des Brennstoffzellenstapels 1 übernimmt beziehungsweise aufrechterhält. Zu diesem Zweck ist ein Verriegelungselement 1.6 vorgesehen, das beispielsweise eine Mutter umfassen kann, wenn der Zuganker 1.4, zumindest in seinem unteren Abschnitt, durch eine Gewindestange gebildet ist. Der Zuganker 1.4 steht über ein Koppelelement 8.2 lösbar mit der Zugeinrichtung 8.1 in Verbindung. Die Zugeinrichtung 8.1 ist über einen Trägerrahmen 8.3 kraftschlüssig mit dem Tisch 5 verbunden und dazu ausgelegt, eine geregelte Kraftkomponente F in einer Richtung x auf den Zuganker 1.4 und somit den Brennstoffzellenstapel 1 auszuüben. Dadurch wird der Brennstoffzellenstapel 1 mehr oder weniger verspannt. Die Zugeinrichtung 8.1 kann die geregelte Kraftkomponente F beispielsweise hydraulisch, pneumatisch oder elektrisch erzeugen. Der Zugeinrichtung 8.1 wird von einer Regeleinrichtung 8.6 eine Stellgröße für die zu erzeugende Zugkraft zugeführt. Die Regeleinrichtung 8.6 erzeugt die Stellgröße bei der dargestellten Ausführungsform in Abhängigkeit von einer oder mehreren über wenigstens einen Kraftsensor 8.4 erfassten Kraft und einer über zumindest einen Wegsensor 8.5 erfassten Veränderung der Abmessungen des Brennstoffzellenstapels 1.

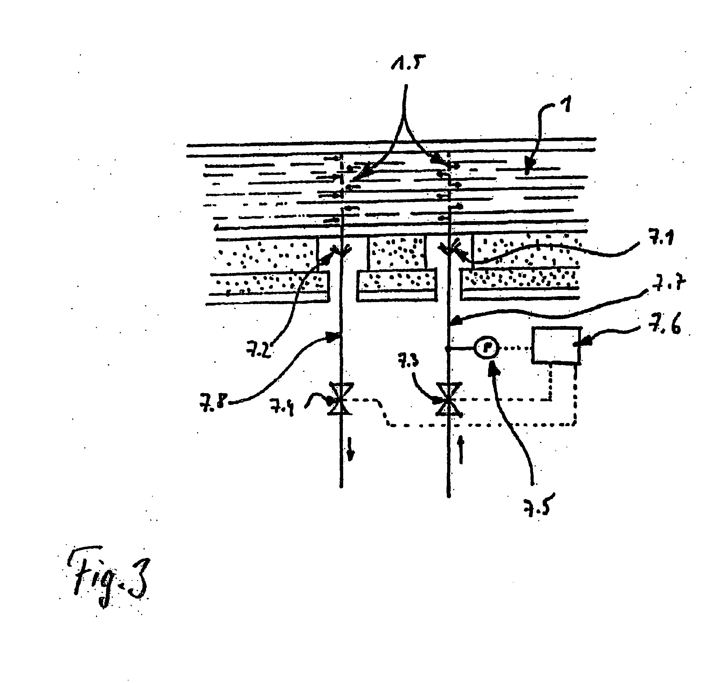

Figur 3 zeigt eine vereinfachte, schematische Prinzipdarstellung einer Einrichtung zur Gaszu- und -abfuhr, wobei diese Einrichtung Bestandteil der Vorrichtung von Figur 1 ist. Gemäß der Darstellung von Figur 3 umfasst der Brennstoffzellenstapel 1 innere Kanäle 1.5 zur Führung eines Gases, insbesondere zur Führung eines Anodengases, die jeweils zumindest eine nach außen offene Seite aufweisen. Der Brennstoffzellenstapel 1 kann darüber hinaus weitere, nicht dargestellte, interne Kanäle zur Führung eines Kathodengases aufweisen. Zusätzlich oder alternativ können die Kathodenseiten der Brennstoffzellen nach außen offen sein. Die internen Verteilkanäle 1.5 münden in lösbare Rohrverbindungen 7.1 für die Anodengaszufuhrleitung 7.7 und lösbare Rohrverbindungen 7.2 für die Anodengasabfuhrleitung 7.8. Der Anodengaszufuhr ist ein Ventil 7.3 zugeordnet, während der Anodengasabfuhr ein Ventil 7.4 zugeordnet ist. Zwischen zumindest einer lösbaren Rohrverbindung, beispielsweise der lösbaren Rohrverbindung 7.1, und dem zugehörigen Absperrventil, beispielsweise dem Absperrventil 7.3, ist eine Druckmesseinrichtung 7.5 vorgesehen, die mit einem Gas-Steuer/Regelgerät 7.6 in Verbindung steht. Sofern der Brennstoffzellenstapel 1 nicht dargestellte, interne Verteilkanäle für Kathodengas aufweist, können auch diese über lösbare Rohrverbindungen mit einer externen Kathodengaszuführung und -abführung verbunden sein. Zur Steuerung beziehungsweise Regelung der Anodengasführung können weitere nicht dargestellte Ventile und Drucksensoren vorgesehen sein. Das Gas-Steuer/Regelgerät 7.6 ist dazu ausgelegt, die vorhandenen Ventile zu öffnen und zu schließen, insbesondere die dargestellten Ventile 7.3 und 7.4.

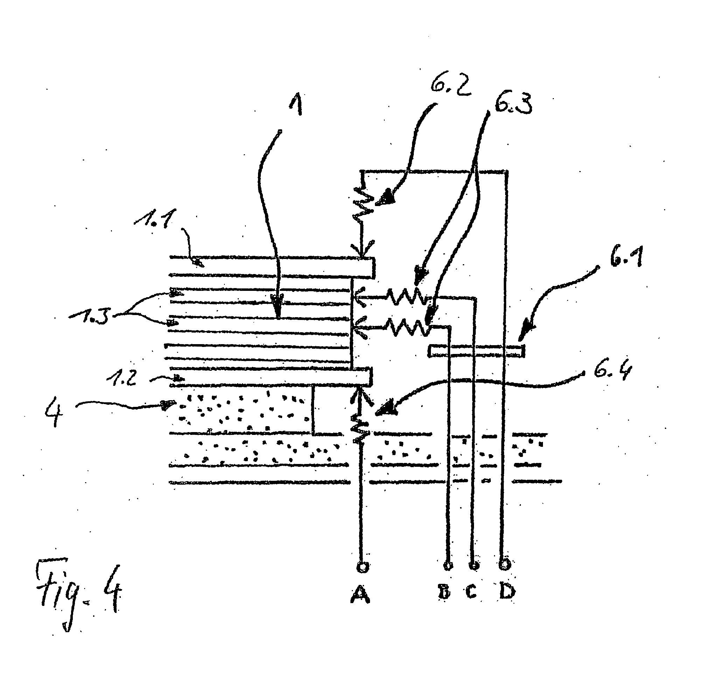

Figur 4 zeigt eine vereinfachte, schematische Prinzipdarstellung einer Einrichtung zur elektrischen Überwachung eines Brennstoffzellestapels, wobei diese Einrichtung Bestandteil der Vorrichtung von Figur 1 ist. Dabei zeigt Figur 4 den Randbereich eines auf der Isolierplatte 4 angeordneten Brennstoffzellenstapels 1. Die Deckplatte 1.1 ist über ein elektrisches Kontaktelement 6.2 mit einer Anschlussklemme D verbunden. In ähnlicher Weise ist die Grundplatte 1.2 über ein Kontaktelement 6.4 mit einer Anschlussklemme A verbunden. Weiterhin sind im dargestellten Fall zwei Einzelzellen 1.3 über Kontaktelement 6.3 mit Anschlussklemmen B und C verbunden. Die Kontaktelemente 6.2, 6.3 und 6.4 können gegebenenfalls durch einen oder mehrere Halter 6.1 mechanisch gestützt werden. Obwohl es im einfachsten Fall ausreichend wäre, nur eine Einzelzelle mit einem Kontaktelement in Verbindung zu bringen, wird bevorzugt, dass zumindest zwei Einzelzellen 1.3 elektrisch abgegriffen werden. An den Anschlussklemmen A bis D können zur Prüfung der Funktionsfähigkeit des Brennstoffzellenstapels 1 Spannungen und/oder Ströme abgegriffen werden. Die Kontaktelemente 6.2, 6.3 und 6.4 bestehen vorzugsweise aus einer temperaturfesten Legierung. Weiterhin sind sie vorzugsweise federnd ausgeführt, um bei minimalen Bewegungen des Brennstoffzellenstapels 1 während des Fertigungsprozesses stets einen elektrischen Kontakt aufrechtzuerhalten.

Nachfolgend wird die Funktionsweise der in den Figuren 2 bis 4 dargestellten Komponenten der Vorrichtung von Figur 1 sowie eine Möglichkeit zur Durchführung des erfindungsgemäßen Verfahrens erläutert.

### Brennstoffzellenstapel fügen

Zunächst wird der Brennstoffzellenstapel kalt aufgestapelt, das heißt die im unreduzierten Zustand befindlichen Einzelzellen 1.3 sowie die Grundplatte 1.2 und die Deckplatte 1.1 werden aufgestapelt, wobei Glaslot als Paste appliziert beziehungsweise als Folie mit aufgestapelt wird. Anschließend wird der aufgestapelte Brennstoffzellenstapel 1 auf die Isolierplatte 4 gesetzt. Obwohl die Erfindung nicht auf derartige Ausführungsformen beschränkt ist, wird im dargestellten Fall nur ein Zuganker 1.4 mit dem zugehörigen Koppelstück 8.2 der Zugeinrichtung 8.1 verbunden (Figur 2). Anschließend werden die lösbaren gasdichten Verbindungen 7.1 und 7.2 hergestellt, wobei die Ventile 7.3 und 7.4 zunächst geschlossen sind (Figur 3). Weiterhin werden die elektrischen Kontakte 6.2, 6.3 und 6.4 aufgesetzt (Figur 4). Anschließend wird die Haube 2 geschlossen (Figur 1). Über die Gaszufuhr 9 kann die Prozesskammer 11 mit einem Inertgas geflutet werden, wobei über die Gasabfuhr 10 eine Gaspendelung durchgeführt werden kann. Wenn die gegebenenfalls vorgeheizten Heizelement 3 eingeschaltete werden, wird die Prozesskammer 11 und somit der in dieser angeordnete aufgestapelte Brennstoffzellenstapel 1 erhitzt. Dadurch beginnt das Glaslot zu schmelzen. Nun wird die Zugeinrichtung 8.1 aktiviert, wodurch diese beginnt, den aufgestapelten Brennstoffzellenstapel 1 zu komprimieren und somit zu verspannen. Dadurch wird die durch die Schrumpfung des Glaslots bedingte Längenabnahme des Brennstoffzellenstapels 1 zumindest größtenteils ausgeglichen. Über den Kraftsensor 8.4 und den Wegsensor 8.5 wird die Kraft-Weg-Kurve der Verspannung des Brennstoffzellenstapels 1 erfasst. Bei Ausführungsformen, bei denen mehrere Zuganker vorgesehen sind, erfolgt dies vorzugsweise für jeden Zuganker. Die Kraft-Weg-Kurve wird mit einer oder mit mehreren vordefinierten Soll-Kurven verglichen. Sollten sich Abweichungen ergeben, so deutet dies auf einen ungleichmäßige Verspannung des Brennstoffzellenstapels 1 hin. In diesem Fall können geeignete Gegenmaßnahmen eingeleitet werden. Beispielsweise kann die durch die zumindest eine Zugeinrichtung erzeugte Kraftkomponente vergrößert oder verkleinert werden. Obwohl dies nicht dargestellt ist, wird es als vorteilhaft erachtet, mehrere Zuganker und gegebenenfalls mehrere Zugeinrichtung vorzusehen, weil einer ungleichmäßigen Verspannung des Brennstoffzellenstapels 1 in diesem Fall besonders wirksam entgegengewirkt werden kann.

### Brennstoffzellestapel auf Dichtheit prüfen

Ist ein Zustand erreicht, in dem die Glasdichtungen soweit aufgeschmolzen sind, dass die Gasdichtheit des Brennstoffzellenstapels 1 anzunehmen ist, wird der Brennstoffzellenstapel 1 durch Öffnen der Ventile 7.3 und 7.4 mit einem inerten Prüfgas geflutet (Figur 3). Es wird solange Gas zugeführt, bis ein bestimmter Druck erreicht ist. Dann werden die Ventile 7.3 und 7.4 geschlossen. Gegebenenfalls kann das Prüfgas vorgewärmt sein, um Temperaturschocks im Brennstoffzellenstapel zu vermeiden. Der Druck im Brennstoffzellenstapel 1 wird über den Drucksensor 7.5 erfasst und in dem Gas-Steuer/Regelgerät 7.6 aufgewertet. Übersteigt ein über einen vorgegebenen Zeitraum erfasster Druckabfall einen Grenzwert, wird auf einen undichten Brennstoffzellenstapel geschlossen. Zusätzlich oder alternativ zur Erfassung eines Druckabfalls kann ein Prüfgas verwendet werden, das bei einer Undichtigkeit in die Prozesskammer 11 übertritt. Über die Gasabfuhr 10 können Spuren des Prüfgases abgesaugt und über einen nicht dargestellten Gassensor mengenmäßig erfasst werden. Der Grad des Druckabfalls beziehungsweise die Menge des ausgetretenen Prüfgases ist ein Maß für die Dichtheit des Brennstoffzellenstapels 1. Sofern eine Undichtigkeit festgestellt wurde, können noch im Prozess Gegenmaßnahmen ergriffen werden. Beispielsweise kann eine stärkere Verpressung vorgenommen, eine längere Zeit zum Aufschmelzen der Dichtungen gewählt und/oder die Temperatur erhöht werden. Lassen sich die gewünschten Eigenschaften des Brennstoffzellenstapels 1 trotz der Einleitung von Gegenmaßnahmen nicht erzielen, so kann der Prozess notfalls abgebrochen werden. Sofern für die Führung des Kathodengases im Brennstoffzellenstapel 1 interne Kanäle vorgesehen sind, kann die Prüfung des Brennstoffzellenstapels 1 auf Dichtheit sinngemäß erfolgen.

### Brennstoffzellenstapel formieren

Sofern die Dichtheitskriterien erfüllt sind, kann im nächsten Schritt eine chemische Formierung der Brennstoffzellen erfolgen, das heißt eine Reduktion. Zu diesem Zweck wird die mechanische Verspannung des Brennstoffzellenstapels 1 weiter überwacht (Figur 2), über die Ventile 7.3 und 7.4 (Figur 3) wird jedoch nun ein vorzugsweise kontinuierlicher Strom eines reduzierenden Gases, vorzugsweise eines reduzierenden Gasgemisches wie Wasserstoff und Stickstoff, durch den dichten Brennstoffzellenstapel 1 geleitet. Das Formiergas kann gegebenenfalls vorgewärmt sein, um Temperaturschocks im Brennstoffzellenstapel 1 zu vermeiden. Insbesondere wenn das Formiergas feuer- oder explosionsgefährlich ist, muss ein Austreten des Formiergases aus der Prozesskammer 11 sicher vermieden werden. Zu diesem Zweck kann in der Prozesskammer 11 über die Gaspendelung 9 und 10 ein Unterdruck aufrechterhalten werden. Dies führt dazu, dass bei einer eventuell auftretenden Leckage des Brennstoffzellenstapels 1 während der Formierung austretendes Wasserstoffgas durch die in die Prozesskammer 11 eintretende Luft sofort verbrannt wird. Zusätzlich oder alternativ kann in der Prozesskammer 11 ein stetiger Gasaustausch über die Pendelung 9 und 10 sichergestellt werden, um austretendes Formiergas aus der Prozesskammer 11 zu entfernen. Spuren von ausgetretenem Formiergas können gegebenenfalls mit einem Sensor stromabwärts von der Gasabfuhr 10 gemessen werden. Derartige Spuren von ausgetretenem Formiergas sind bereits während des Prozesses ein Maß für eine eventuelle Undichtigkeit des Brennstoffzellenstapels 1. Sofern eine Undichtigkeit festgestellt wird, können immer noch geeignete Gegenmaßnahmen eingeleitet werden. Während des Formierens ändert sich die Mikrostruktur der Brennstoffzellen. Dies geht mit einer Volumenänderung einher. Durch die Regelung der zumindest einen Kraftkomponente F (Figur 2) während des Verpressens kann diese Volumenänderung zumindest größtenteils ausgeglichen werden.

### Brennstoffzellenstapel auf elektrische Funktionsfähigkeit prüfen

Sofern der Brennstoffzellenstapel 1 nach dem Formieren noch dicht ist und alle Brennstoffzellen reduziert sind, ist der Brennstoffzellenstapel 1 elektrisch betriebsbereit. Der Brennstoffzellenstapel 1 wird nun über die Ventile 7.3 und 7.4 (Figur 3) mit einem wasserstoffhaltigen Brenngas geflutet. Die Prozesskammer 11 wird über die Gaspendelung 9 und 10 mit einem Kathodengas geflutet, beispielsweise mit Luft. Sofern die Führung des Kathodengases über interne Kanäle erfolgt, werden diese benutzt, um den Brennstoffzellenstapel 1 mit Kathodengas zu füllen. Durch die Beaufschlagung des Anodenseite des Brennstoffzellenstapels 1 mit einem Brenngas und der Kathodenseite des Brennstoffzellenstapels 1 mit einem Kathodengas entsteht im Brennstoffzellenstapel 1 eine elektrische Spannung. Ihre Höhe ist ein Maß für die Güte des Brennstoffzellenstapels 1. Die Spannung kann über die Kontaktelemente 6.2 und 6.4 abgegriffen und an den Anschlussklemmen A und D gemessen werden. Die Spannungsdifferenz zwischen einer bestimmten Anzahl von Einzelzellen 1.3, die über die Kontaktelemente 6.3 abgegriffen und an den Anschlussklemmen B und C gemessen werden kann, ist ein Maß für die Güte der Einzelzellen 1.3, die zwischen den Kontaktelementen 6.3 liegen. Bei bevorzugten Ausführungsformen wird jede einzelne Brennstoffzelle vermessen, da es ein Gütekriterium ist, das alle Einzelzellen nicht mehr als einen vorgegebenen Betrag von einer vorgegebenen Spannung abweichen. Gegebenenfalls können zumindest die Kontaktelemente 6.2 und 6.4 so ausgeführt werden, dass sie höhere Ströme als reine Spannungsabgriffe leiten können. Zum Prüfen des Brennstoffzellenstapels 1 kann über die Kontaktelemente 6.2 und 6.4 ein Strom aus dem Brennstoffzellenstapel 1 entnommen werden. Dabei sinkt die Spannung zwischen den Kontaktelementen 6.2 und 6.4 sowie jeweils zwischen den Kontaktelementen 6.3. Ein Prüfungskriterium kann dabei darin bestehen, dass der Verlauf der Abnahme der Spannung bei Erhöhung des Stroms nicht mehr als einen bestimmten Betrag von einem vordefinierten Verlauf abweicht.

### Brennstoffzellenstapel entnehmen

Noch während der Zuganker 1.4 durch die Zugeinrichtung 8.1 unter mechanischer Spannung steht, wird brennstoffzellenstapelseitig vor dem Koppelelement 8.2 ein Verriegelungselement 1.6 angebracht (Figur 2), das die Zugspannung im Zuganker 1.4 auch dann weiter hält, wenn das Koppelelement 8.2 geöffnet und die Zugeinrichtung 8.1 vom Brennstoffzellenstapel 1 getrennt wird. Vorzugsweise verbleiben der Zuganker 1.4 und das Verriegelungselement 1.6 am Brennstoffzellenstapel 1. Es wird als vorteilhaft erachtet, wenn das Verriegelungselement 1.6 vor dem Erhitzen des Brennstoffzellenstapels 1 bereits lose vormontiert auf dem Zuganker 1.4 sitzt und erst nach dem erfolgreichen Verspannen des Brennstoffzellenstapels 1 angezogen beziehungsweise verriegelt wird. Bei einer geeigneten Ausführung der Durchführung des Koppelelementes 8.2 kann das Anziehen beziehungsweise Verriegeln des Verriegelungselementes 1.6 von der kalten Seite der Grundplatte 5 her erfolgen.

### Einbindung in den Produktionsprozess

Die vorstehend erläuterten Schritte können in einer einzelnen, frei stehenden Prozesskammer 11 durchgeführt werden, die als Montage- und Prüfkammer dient.

Es wird jedoch bevorzugt, wenn mehrere Prozesskammern in eine Einrichtung zur kontinuierlichen Montage integriert werden. Eine derartige Einrichtung zur kontinuierlichen Montage kann beispielsweise durch ein Karussell gebildet werden, an dessen Armen sich jeweils Prozesskammern 11 befinden. Vorzugsweise sind die Gaszu- und -abfuhrleitungen sowie die elektrischen Zuführungen in der Nabe des Karussells angeordnet und erstrecken sich sternförmig zu den Prozesskammern 11. Befindet sich das Karussell in einer bestimmten Position, so kann eine Haube 2 geöffnet und der aufgestapelte Brennstoffzellenstapel 1 kalt eingebaut werden. Anschließend wird die Haube 2 geschlossen und das Karussell dreht sich weiter. Alle Schritte zum Fügen und Prüfen laufen dann vorzugsweise in der Zeit ab, die das Karussell für eine Umdrehung benötigt. Befindet sich das Karussell wieder in der Ausgangsposition, so kann ein fertiger Brennstoffzellenstapel 1 entnommen und ein weiterer kalter aufgestapelter Brennstoffzellenstapel 1 aufgesetzt werden.

Die Erfindung ermöglich es im Vergleich zum Stand der Technik, die bei der Herstellung von Brennstoffzellenstapeln auftretenden Ausschusszahlen deutlich zu senken und die Güte der Brennstoffzellenstapel zu erhöhen.

### Bezugszeichenliste

- 1: Brennstoffzellenstapel
- 1.1: obere Deckplatte
- 1.2: untere Grundplatte
- 1.3: Brennstoffzellen
- 1.4: Zuganker
- 1.5: Ausnehmung
- 1.6: Verriegelungselement
- 2: Haube
- 3: Heizelemente
- 4: Isolierplatte
- 5: Tisch
- 6: Einrichtung zur elektrischen Überwachung
- 6.1: Halter
- 6.2: Kontaktelement
- 6.3: Kontaktelement
- 6.4: Kontaktelement
- 7: Einrichtung zur Gaszu- und -abfuhr
- 7.1: Rohrverbindung für die Anodengaszufuhr
- 7.2: Rohrverbindung für die Anodengasabfuhr
- 7.3: Ventil
- 7.4: Ventil
- 7.5: Druckmesseinrichtung
- 7.6: Gas-Steuer/Regelgerät
- 7.7: Gaszufuhrleitung
- 7.8: Gasabfuhrleitung
- 8: Einrichtung zur mechanischen Spannung und Überwachung
- 8.1: Zugeinrichtung
- 8.2: Koppelelement
- 8.3: Trägerrahmen
- 8.4: Kraftsensor
- 8.5: Wegsensor
- 8.6: Regeleinrichtung
- 9: Gaszufuhr
- 10: Gasabfuhr
- 11: Prozesskammer
- A: Anschlussklemme
- B: Anschlussklemme
- C: Anschlussklemme
- D: Anschlussklemme
- F: Kraftkomponente
- x: Richtung der Kraftkomponente

## Patentansprüche

1. Verfahren zur Herstellung eines Brennstoffzellenstapels, mit den Schritten:
a) Aufstapeln eines Brennstoffzellenstapels (1), und
b) Fügen des Brennstoffzellenstapels (1) unter Erhitzen und Komprimieren des aufgestapelten Brennstoffzellenstapels (1),
**dadurch gekennzeichnet, dass** das Komprimieren des aufgestapelten Brennstoffzellenstapels das Anlegen von zumindest einer geregelten Kraftkomponenten (F) an den aufgestapelten Brannstoffzellenstapel (1) umfasst.

2. Verfahren nach Anspruch 1, **dadurch gekennzeichnet, dass** in die Regelung der zumindest einen Kraftkomponente (F) eine über zumindest einen Kraftsensor (8.4) erfasste Verspannung des aufgestapelten Brennstoffzellenstapels (1) eingeht.

3. Verfahren nach Anspruch 1 oder 2, **dadurch gekennzeichnet, dass** in die Regelung der zumindest einen Kraftkomponente (F) eine über zumindest einen Streckensensor (8.5) erfasste Änderung einer Abmessung des aufgestapelten Brennstoffzellenstapels (1) eingeht.

4. Verfahren nach einem der vorhergehenden Ansprüche, **dadurch gekennzeichnet, dass** die zumindest eine geregelte Kraftkomponente durch eine Druck- und/oder Zugeinrichtung (8.1) erzeugt und vorzugsweise über zumindest einen Zuganker (1.4) auf den aufgestapelten Brennstoffzellenstapel (1) übertragen wird.

5. Verfahren nach Anspruch 4, **dadurch gekennzeichnet, dass** sich der zumindest eine Zuganker (8.1) durch eine im dem aufgestapelten Brennstoffzellenstapel (1) vorgesehene Ausnehmung (1.5) erstreckt.

6. Verfahren nach einem der vorhergehenden Ansprüche, **dadurch gekennzeichnet, dass** es weiterhin den folgenden während und/oder nach dem Schritt b) durchgeführten Schritt umfasst:
c) Überprüfen des bereits zumindest teilweise gefügten Brennstoffzellenstapels (1) auf Gasdichtheit.

7. Verfahren nach Anspruch 6, **dadurch gekennzeichnet, dass** der Schritt c) umfasst, dass der Brennstoffzellenstapel (1) mit einem Gas geflutet wird, vorzugsweise mit einem inerten Prüfgas, und dass eine eventuelle Undichtigkeit des Brennstoffzellenstapels (1) über einen Druckabfall des Gases erfasst wird.

8. Verfahren nach Anspruch 7, **dadurch gekennzeichnet, dass** im Falle einer erfassten Undichtigkeit des Brennstoffzellenstapels (1) der Brennstoffzellenstapel (1) weiter erhitzt und/oder der Brennstoffzellenstapel (1) weiter komprimiert wird.

9. Verfahren nach einem der vorhergehenden Ansprüche, **dadurch gekennzeichnet, dass** es weiterhin den folgenden während und/oder nach dem Schritt b) und vorzugsweise während und/oder nach dem Schritt c) durchgeführten Schritt umfasst:
d) chemisches Formieren der Brennstoffzellen (1.3) des Brennstoffzellenstapels (1) durch einbringen eines reduzierenden Gases, insbesondere eines reduzierenden Gasgemisches wie Wasserstoff und Stickstoff, in die Brennstoffzellen (1.3) des Brennstoffzellenstapels (1).

10. Verfahren nach Anspruch 9, **dadurch gekennzeichnet, dass** eine durch den Schritt d) hervorgerufene Volumenänderung des Brennstoffzellenstapels (1) durch eine entsprechende Kompression des Brennstoffzellenstapels (1) zumindest teilweise ausgeglichen wird.

11. Verfahren nach Anspruch 9 oder 10, **dadurch gekennzeichnet, dass** es weiterhin den folgenden nach dem Schritt d) durchgeführten Schritt umfasst:
e) Prüfen der elektrischen Funktionsfähigkeit des Brennstoffzellenstapels (1).

12. Verfahren nach Anspruch 11, **dadurch gekennzeichnet, dass** die Durchführung des Schrittes e) umfasst, dass eine Anodenseite des Brennstoffzellenstapels (1) mit einem Brenngas und eine Kathodenseite des Brennstoffzellenstapels (1) mit einem Kathodengas beaufschlagt wird, und dass eine in dem Brennstoffzellenstapel (1) entstehende Spannung und/oder ein dem Brennstoffzellenstapel entnehmbarer Strom gemessen wird.

13. Verfahren nach Anspruch 4, **dadurch gekennzeichnet, dass** es weiterhin den folgenden Schritt umfasst:
f) Verbinden des zumindest einen Zugankers (1.4) mit zumindest einem Verriegelungselement (1.6), das die Verspannung des Brennstoffzellenstapels (1) zumindest näherungsweise auch dann aufrechterhält, wenn der zumindest eine Zuganker (1.4) von der Druck- und/oder Zugeinrichtung (8.1) gelöst wird.

14. Verfahren nach einem der vorhergehenden Ansprüche, **dadurch gekennzeichnet, dass** zumindest die Schritte b) und d), vorzugsweise jedoch zumindest die Schritte b), c), d) und e) in einer gasdichten Prozesskammer (11) durchgeführt werden, vorzugsweise ohne die Prozesskammer (11) zwischenzeitlich zu öffnen.

15. Vorrichtung zur Herstellung eines Brennstoffzellenstapels (1), insbesondere Vorrichtung zur Durchführung des Verfahrens nach einem der Ansprüche 1 bis 14, mit einer Heizeinrichtung (3) zum Erhitzen eines aufgestapelten Brennstoffzellenstapels (1) und einer Einrichtung (8) zum Komprimieren des aufgestapelten Brennstoffzellenstapels (1), wobei die Einrichtung (8) zum Komprimieren des aufgestapelten Brennstoffzellenstapels (1) eine Druck- und/oder Zugeinrichtung (8.1) umfasst, die dazu geeignet ist, zumindest eine geregelte Kraftkomponente (F) auf den aufgestapelten Brennstoffzellenstapel (1) auszuüben, **dadurch gekennzeichnet, dass** der Druck- und/oder Zugeinrichtung (8.1) zur Regelung der zumindest einen Kraftkomponente (F) eine Regelungseinrichtung (8.6) zugeordnet ist, welche die zumindest eine Kraftkomponente (F) in Abhängigkeit von einer über zumindest einen Streckensensor (8.5) erfassten Änderung einer Abmessung des aufgestapelten Brennstoffzellenstapels (1) regelt.

16. Vorrichtung nach Anspruch 15, **dadurch gekennzeichnet, dass** die Regelungseinrichtung (8.6) die zumindest eine Kraftkomponente F weiterhin in Abhängigkeit von einer über zumindest einen Kraftsensor (8.4) erfassten Verspannung des aufgestapelten Brennstoffzellenstapels (1) regelt.

17. Vorrichtung nach Anspruch 16, **dadurch gekennzeichnet, dass** die Druck- und/oder Zugeinrichtung (8.1) dazu geeignet ist, die zumindest eine geregelte Kraftkomponente (F) über einen Zuganker (1.4) auf den aufgestapelten Brennstoffzellenstapel (1) zu übertragen.

18. Vorrichtung nach einem der Ansprüche 15 bis 17, **dadurch gekennzeichnet, dass** sie eine zur Aufnahme des aufgestapelten Brennstoffzellenstapels (1) vorgesehene gasdichte Prozesskammer (11) und eine Gaszufuhreinrichtung (7, 9) aufweist, die dazu vorgesehen ist, die Prozesskammer (11) und/oder einen in dieser angeordneten Brennstoffzellenstapel (1) mit Gas zu fluten.

19. Vorrichtung nach Anspruch 18, **dadurch gekennzeichnet, dass** sie eine Gasabfuhreinrichtung (10) aufweist.

20. Vorrichtung nach einem der Ansprüche 15 bis 19, **dadurch gekennzeichnet, dass** sie eine elektrische Prüfeinrichtung (6) aufweist.

21. Vorrichtung nach einem der Ansprüche 18 bis 20, **dadurch gekennzeichnet, dass** sie eine Mehrzahl von beweglichen gasdichten Prozesskammern (11) aufweist, die dazu vorgesehen sind, zur Durchführung einzelner Brennstoffzellenstapel- Herstellungsschritte zu verschiedenen Bearbeitungsstationen bewegt zu werden.

22. Vorrichtung nach Anspruch 21, **dadurch gekennzeichnet, dass** die Mehrzahl der gasdichten Prozesskammern (11) in Form eines Karussells angeordnet sind.

## Claims

1. A method for producing a fuel cell stack, comprising the steps of:
a) stacking a fuel cell stack (1), and
b) assembling the fuel cell stack (1) while heating and compressing the stacked fuel cell stack (1),
**characterized in that** compressing the stacked fuel cell stack comprises applying at least one controlled force component (F) to the stacked fuel cell stack (1).

2. The method as claimed in claim 1, **characterized in that** a stress of the stacked fuel cell stack (1) recorded via at least one force sensor (8.4) enters into the control of the at least one force component (F).

3. The method as claimed in claim 1 or 2, **characterized in that** a change in dimension of the stacked fuel cell stack (1) recorded via at least one distance sensor (8.5) enters into the control of the at least one force component (F).

4. The method as claimed in any of the preceding claims, **characterized in that** the at least one controlled force component is generated by a pressure and/or traction means (8.1) and transmitted to the stacked fuel cell stack (1) preferably via at least one tie anchor (1.4).

5. The method as claimed in claim 4, **characterized in that** the at least one tie anchor (8.1) extends through a recess (1.5) provided in the stacked fuel cell stack (1).

6. The method as claimed in any of the preceding claims, **characterized in that** it further comprises the following step, performed during and/or after step b):
c) checking the already at least partially assembled fuel cell stack (1) for gas tightness.

7. The method as claimed in claim 6, **characterized in that** step c) comprises flooding the fuel cell stack (1) with a gas, preferably with an inert test gas, and recording a possible leakage of the fuel cell stack (1) via a pressure loss of the gas.

8. The method as claimed in claim 7, **characterized in that** in the case of a recorded leakage of the fuel cell stack (1) the fuel cell stack (1) is further heated and/or the fuel cell stack (1) is further compressed.

9. The method as claimed in any of the preceding claims, **characterized in that** it further comprises the following step, performed during and/or after step b) and preferably during and or/after step c):
d) chemical forming of the fuel cells (1.3) of the fuel cell stack (1) by bringing in a reduced gas, in particular a reduced gas mixture like hydrogen and nitrogen, into the fuel cells (1.3) of the fuel cell stack (1).

10. The method as claimed in claim 9, **characterized in that** a volume change of the fuel cell stack (1), produced by step d) is at least partially compensated by a corresponding compression of the fuel cell stack (1).

11. The method as claimed in claim 9 or 10, **characterized in that** it further comprises the following step, performed after step d) :
e) testing the electrical operability of the fuel cell stack (1).

12. The method as claimed in claim 11, **characterized in that** the execution of step e) comprises admitting a fuel gas to an anode side of the fuel cell stack (1) and a cathode gas to a cathode side of the fuel cell stack (1) and measuring a voltage produced in the fuel cell stack (1) and/or a current withdrawable from the fuel cell stack.

13. The method as claimed in claim 4, **characterized in that** it further comprises the following step:
f) coupling the at least one tie anchor (1.4) to at least one locking member (1.6) which maintains the stress of the fuel cell stack (1) at least approximately also if the at least one tie anchor (1.4) is released from the pressure and/or traction means (8.1).

14. The method as claimed in any of the preceding claims, **characterized in that** at least steps b) and d), preferably however at least steps b), c), d), and e), are performed in a gas-tight process chamber (11), preferably without opening the process chamber (11) in the meantime.

15. A device for producing a fuel cell stack (1), in particular a device for performing the method as claimed in any of claims 1 to 14, having a heating means (3) for heating a stacked fuel cell stack (1) and a means (8) for compressing the stacked fuel cell stack (1), wherein the means (8) for compressing the stacked fuel cell stack (1) comprises a pressure and/or traction means (8.1) capable of exerting at least one controlled force component (F) on the stacked fuel cell stack (1), **characterized in that** a control means (8.6) which controls the at least one force component (F) as a function of a change of a dimension of the stacked fuel cell stack (1) recorded via at least one distance sensor (8.5) is allocated to the pressure and/or traction means (8.1), for controlling the at least one force component (F).

16. The device as claimed in claim 15, **characterized in that** the control means (8.6) controls the at least one force component (F) further as a function of a stress of the stacked fuel cell stack (1) recorded via at least one force sensor (8.4).

17. The device as claimed in claim 16, **characterized in that** the pressure and/or traction means (8.1) is capable of transmitting the at least one controlled force component (F) to the stacked fuel cell stack via a tie anchor (1.4).

18. The device as claimed in any of claims of 15 to 17, **characterized in that** it comprises a gas-tight process chamber (11) provided for receiving the stacked fuel cell stack (1), and a gas supply means (7, 9) provided for flooding with gas the process chamber (11) and/or a fuel cell stack (1) arranged in the process chamber.

19. The device as claimed in claim 18, **characterized in that** it comprises a gas discharge means (10).

20. The device as claimed in any of claims 15 to 19, **characterized in that** it comprises an electrical testing means (6).

21. The device as claimed in any of claims 18 to 20, **characterized in that** it comprises a plurality of mobile gas-tight process chambers (11) provided for being moved to various processing stations for performing individual fuel cell stack production steps.

22. The device as claimed in claim 21, **characterized in that** the plurality of gas-tight process chambers (11) are arranged in form of a carousel.

## Revendications

1. Procédé pour produire un bloc de piles à combustible, comportant les étapes suivantes:
a) empiler le bloc de piles à combustible (1), et
b) assembler le bloc de piles à combustible (1) sous chauffage et compression du bloc de piles à combustible (1) empilé,
**caractérisé en ce que** la compression du bloc de piles à combustible empilé comprend l'application d'au moins un composant de force (F) réglé au bloc de piles à combustible (1) empilé.

2. Procédé selon la revendication 1, **caractérisé en ce qu'**un serrage du bloc de piles à combustible (1) empilé, saisi moyennant au moins un capteur de force (8.4), entre dans le réglage du au moins un composant de force (F).

3. Procédé selon la revendication 1 ou 2, **caractérisé en ce qu'**un changement de dimension du bloc de piles à combustible (1) empilé, saisi moyennant au moins un capteur de distance (8.5), entre dans le réglage du au moins un composant de force (F).

4. Procédé selon l'une des revendications précédentes, **caractérisé en ce que** le au moins un composant de force réglé est généré par un moyen de pression et/ou de traction (8.1) et transmis au bloc de piles à combustible (1) empilé de préférence à travers au moins un tirant (1.4).

5. Procédé selon la revendication 4, **caractérisé en ce que** le au moins un tirant (8.1) s'étend à travers une exclusion (1.5) prévue dans le bloc de piles à combustible (1) empilé.

6. Procédé selon l'une des revendications précédentes, **caractérisé en ce qu'**il comprend en plus l'étape suivante, effectuée pendant et/ou après l'étape b):
c) vérifier en vue d'étanchéité gaz le bloc de piles à combustible (1) déjà au moins partiellement assemblé.

7. Procédé selon la revendication 6, **caractérisé en ce que** l'étape c) comprend que le bloc de piles à combustible est noyé (1) avec un gaz, de préférence avec un gaz inerte, et qu'une fuite éventuelle du bloc de piles à combustible
(1) est détectée par une baisse de pression du gaz.

8. Procédé selon la revendication 7, **caractérisé en ce que,** au cas d'une fuite détectée du bloc de piles à combustible (1), le bloc de piles à combustible (1) est encore chauffé et/ou le bloc de piles à combustible (1) est encore comprimé.

9. Procédé selon l'une des revendications précédentes, **caractérisé en ce qu'**il comprend en plus l'étape suivante, effectuée pendant et/ou après l'étape b) et de préférence pendant et/ou l'étape c):
d) former chimiquement les piles à combustible (1.3) du bloc de piles à combustible (1) en admettant un gaz réduit, en particulier un mélange de gaz réduit comme d'hydrogène et de nitrogène, dans les piles à combustible (1.3) du bloc de piles à combustible (1).

10. Procédé selon la revendication 9, **caractérisé en ce qu'**un changement de volume du bloc de piles à combustible (1), produit par l'étape d), est compensé au moins partiellement par une compression correspondante du bloc de piles à combustible (1).

11. Procédé selon la revendication 9 ou 10, **caractérisé en ce qu'**il comprend en plus l'étape suivante, effectuée après l'étape d):
e) vérifier la capacité de fonctionnement du bloc de piles à combustible (1).

12. Procédé selon la revendication 11, **caractérisé en ce que** la réalisation de l'étape e) comprend qu'un gaz combustible est admis à une face anode du bloc de piles à combustible (1) et qu'un gaz cathode est admis à une face cathode du bloc de piles à combustible (1) et qu'une tension générée dans le bloc de piles à combustible (1) et/ou un courant prélevable sur le bloc de piles à combustible sont mesurés.

13. Procédé selon la revendication 4, **caractérisé en ce qu'**il comprend en plus l'étape suivante:
f) relier le au moins un tirant (1.4) à au moins un élément de verrouillage (1.6) qui maintient le serrage du bloc de piles à combustible (1) au moins approximativement aussi quand le au moins un tirant (1.4) est délié du moyen de pression et/ou de traction (8.1).

14. Procédé selon l'une des revendications précédentes, **caractérisé en ce qu'**au moins les étapes b) et d), mais de préférence au moins les étapes b), c), d) et e), sont réalisées dans une chambre de processus (11) étanche-gaz, de préférence sans ouvrir entre-temps la chambre de processus (11).

15. Dispositif pour produire un bloc de piles à combustible (1), en particulier un dispositif pour réaliser le procédé selon l'une des revendications 1 à 14, comportant un moyen de chauffage (3) pour chauffer un bloc de piles à combustible (1) empilé et un moyen (8) pour comprimer le bloc de piles à combustible (1) empilé, le moyen (8) pour comprimer le bloc de piles à combustible (1) empilé comprenant un moyen de pression et/ou de traction apte à exercer au moins un composant de force réglé (F) au bloc de piles à combustible (1) empilé, **caractérisé en ce qu'**un moyen de réglage (8.6) est attribué au moyen de pression et/ou de traction (8.1) pour régler le au moins un composant de force (F), le moyen de réglage (8.6) réglant le au moins un composant de force (F) en fonction d'un changement d'une dimension du bloc de piles à combustible (1) empilé saisi moyennant au moins un capteur de distance (8.5).

16. Dispositif selon la revendication 15, **caractérisé en ce que** le moyen de réglage (8.6) règle le au moins un composant de force (F) en plus en fonction d'un serrage du bloc de piles à combustible (1) empilé saisi moyennant au moins un capteur de force (8.4).

17. Dispositif selon la revendication 16, **caractérisé en ce que** le moyen de pression et/ou de traction (8.1) est apte à transmettre le au moins un composant de force réglé (F) au bloc de piles à combustible empilé à travers un tirant (1.4).

18. Dispositif selon l'une des revendications 15 à 17, **caractérisé en ce qu'**il comprend une chambre de processus (11) étanche-gaz destinée à recevoir le bloc de piles à combustible (1) empilé, et un moyen d'arrivée de gaz (7, 9) destiné à noyer avec du gaz la chambre de processus (11) et/ou un bloc de piles à combustible (1) agencé dans ladite chambre de processus.

19. Dispositif selon la revendication 18, **caractérisé en ce qu'**il comprend un moyen d'enlèvement de gaz (10).

20. Dispositif selon l'une des revendications 15 à 19, **caractérisé en ce qu'**il comprend un moyen électrique de vérification (6).

21. Dispositif selon l'une des revendications 18 à 20, **caractérisé en ce qu'**il comprend une pluralité de chambres de processus (11) étanches-gaz mobiles destinées à être déplacées à des différentes stations d'usinage pour la réalisation d'étapes individuelles de production de blocs de piles à combustible.

22. Dispositif selon la revendication 21, **caractérisé en ce que** la pluralité de chambres de processus (11) étanches-gaz est agencée en forme d'un manège.
